# EUROPEAN PATENT SPECIFICATION

(11) **EP 3 995 025 B1**
(45) Date of publication and mention of the grant of the patent: **03.04.2024**
(21) Application number: 21205670.9
(22) Date of filing: 29.10.2021
(51) Int. Cl.: A43B 5/04, A43B 13/16, B29D 35/06, B29D 35/12

(54) **SKI BOOT AND METHOD FOR PROVIDING A SKI BOOT**
SKISCHUH UND VERFAHREN ZUR BEREITSTELLUNG EINES SKISCHUHS
BOTTE DE SKI ET PROCÉDÉ DE FOURNITURE D'UNE BOTTE DE SKI

(30) Priority: 04.11.2020 IT 202000026248
(43) Date of publication of application: 11.05.2022
(73) Proprietor: La Sportiva S.P.A., 38030 Ziano di Fiemme (TN) (IT)
(72) Inventor: DELLADIO, Lorenzo, 38030 Ziano di Fiemme (TN) (IT)
(74) Representative: Modiano, Micaela Nadia

(56) References cited:
- EP-A1- 3 338 578
- US-A- 3 363 342

## Description

The present invention relates to a ski boot and a method for providing a ski boot.

Ski boots are constituted by a shell, which is pod-shaped and designed to accommodate the foot of the user and is provided by molding with plastic materials of different hardness, and by a leg cuff, which connects the boot with the leg and is designed to wrap around the lower region of the tibia.

The shell, at the toe region and at the heel region, has respective contoured portions, generally stepped, so that it can be rigidly coupled to a ski binding known as "downhill".

As is known, boots for ski-mountaineering have a different structure with respect to regular ski boots in that the activity of ski-mountaineering, and in some situations also the activity of freeriding, involves executing both downhill and uphill segments and routes, of greater or lesser length, over apparently flat terrain.

It is evident that on the downhill segments it is necessary that the configuration of the boot is substantially similar to that of a classic ski boot (and thus with fastening to the ski both in the toe zone and at the heel) while on the uphill segments (in which generally the ski mountaineer progresses with climbing skins) or on apparently flat terrain it is essential that the boot is fastened to the ski only at the toe zone in order to allow the lifting of the heel when pushing (similarly to what occurs in cross-country skiing).

Boots for ski-mountaineering are typically provided among other things with a locking device, which acts between the shell and the leg cuff and is adapted to pass, on command, between an operative position, which is used when going downhill and that locks the relative rotation of the leg cuff with respect to the shell about the pivoting axis, and a non-operative position in which the rotation of the leg cuff is allowed with respect to the shell about the pivoting axis.

With particular reference to boots for ski-mountaineering, it should furthermore be noted that since these are constituted by a shell, normally pod-shaped and made with injection molding of plastic material, and by a sole, optionally notched, typically made of elastomeric material, for example of vulcanized rubber, which is glued to the lower surface of the shell.

With reference to boots for ski-mountaineering, these are furthermore normally provided with a metallic front insert, which is embedded partially in the bottom wall of the shell substantially at the stepped contoured front portion and defines two lateral engagement bodies protruding from the flanks of the toe of the boot.

Such lateral engagement bodies define what is known as a front "lug", which is designed to be coupled, in a way that is known per se, to a toe element of a binding for alpine skiing.

Similarly, at the rear contoured portion, boots for ski-mountaineering have a rear coupling plate which is designed to be coupled to a heel element of a binding for alpine skiing.

Normally the rear coupling plate is screwed to the heel of the shell, while the front lug is embedded in the shell during the molding operations.

Solutions are known, for example described in EP3338578B1, in which the rigid shell of the boot is overmolded directly on a plate-shaped front portion of the sole made of thermoplastic material.

Such solution, according to the applicant, makes it possible to simplify the method of manufacturing ski boots, by avoiding the use of chemical catalysts and of particularly expensive special adhesives, which are typically used to affix the sole to the bottom of the shell.

The aim of the present invention is to provide a ski boot and a method for producing a ski boot that are capable of improving the known art in one or more of the above mentioned aspects.

Within this aim, an object of the invention is to make available a ski boot that is light but rigid.

Another object of the invention is to provide a ski boot and a method for providing a ski boot that are highly reliable, easy to implement and of low cost.

This aim and these and other objects which will become better apparent hereinafter are achieved by a ski boot and by a method for providing a ski boot according to the independent claims, optionally provided with one or more of the characteristics of the dependent claims.

Further characteristics and advantages of the invention will become better apparent from the detailed description that follows of a preferred, but not exclusive, embodiment of the ski boot and of the method for providing a ski boot according to the invention, which is illustrated for the purposes of non-limiting example in the accompanying drawings wherein:

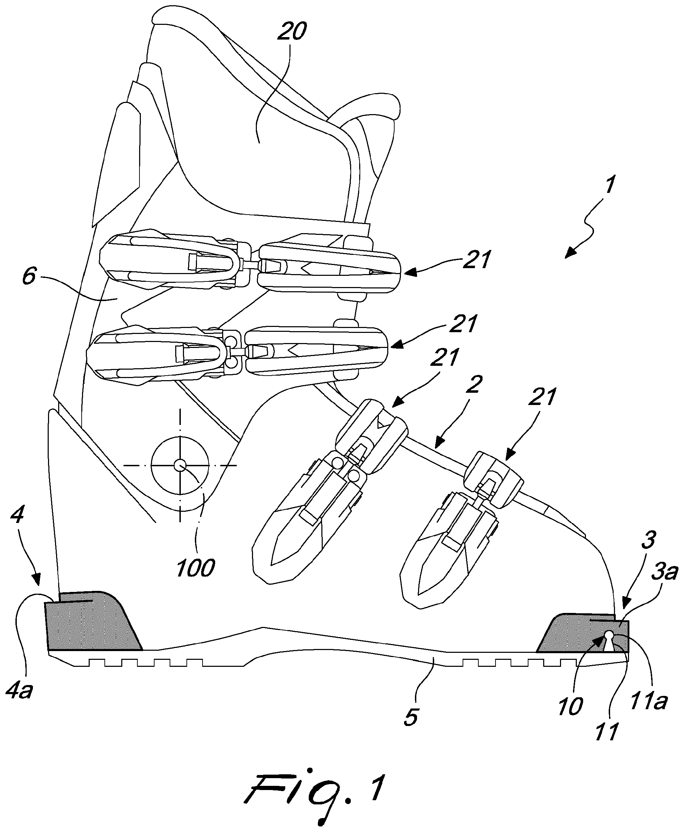

Figure 1 is a side view of a ski boot according to the invention;

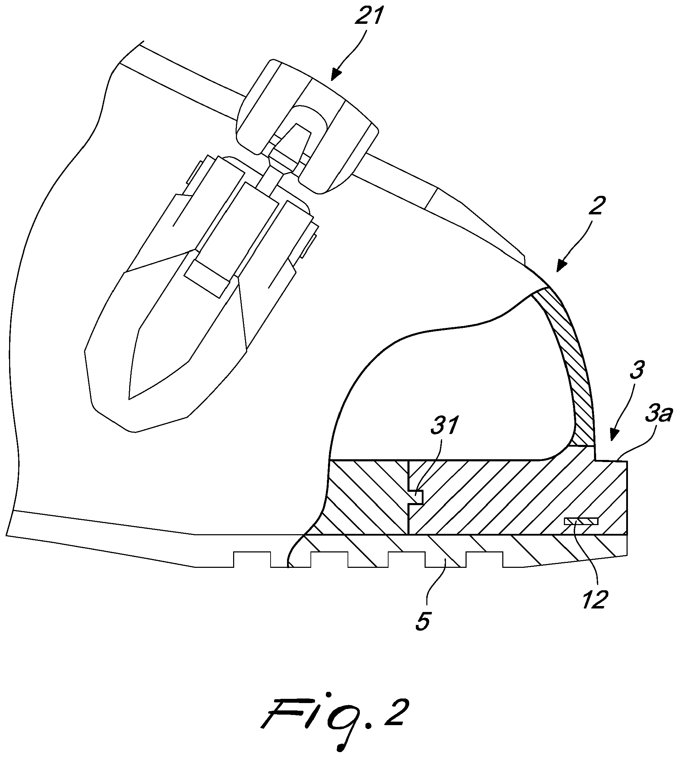

Figure 2 is an enlarged, partially cross-sectional side view of the toe of the boot shown in Figure 1.

With reference to the figures, the present invention relates to a method for providing a ski boot 1 and a ski boot 1.

The ski boot 1 comprises a shell 2 designed to accommodate the foot of a user.

The shell 2 has at least two contoured portions 3a, 4a which are adapted to enable the boot to be coupled to the bindings of a "downhill" ski.

In particular, the shell 2 has, at the toe 3, a front contoured portion 3a and, at the heel 4, a rear contoured portion 4a.

The front contoured portion 3a and the rear contoured portion 4a are conveniently "stepped".

The ski boot 1 is further provided with a leg cuff 6, which is designed to accommodate the lower part of the tibia.

The ski boot 1 is further provided with an inner foot pocket 20 and means for fastening the boot 1, which comprise for example fastening clasps 21.

A method, not part of the invention, for providing the boot 1 comprises, in sequence the following steps:
- providing at least one of the contoured portions 3a, 4a by molding plastic material;
- providing the shell 2 by injection molding of a plastic material that has different characteristics from the plastic material with which the at least one contoured portion 3a, 4a is made.

The method entails a step of providing the shell 2 which comprises:
- inserting the at least one contoured portion 3a, 4a in a mold which defines a molding cavity that corresponds to the shape of the shell 2;
- molding the shell 2 inside the molding cavity which accommodates the at least one contoured portion 3a, 4a;
- extracting the shell 2 from the molding cavity.

The method can entail that the step of providing at least one of the contoured portions 3a, 4a and the step of providing the shell 2 comprise a bi-injection in a molding cavity that corresponds to the shape of the shell 2.

In this latter case, the molding cavity 2 is configured to delimit the at least one contoured portion 3a, 4a during the step of providing at least one of the contoured portions 3a, 4a.

The at least one contoured portion 3a, 4a is made of a different plastic material from the plastic material with which the shell 2 is made.

The wording "different plastic materials" means both plastic materials based on different polymers and also plastic materials with the same base or of the same family of polymers but differently additivated or loaded, so as to have different mechanical and/or chemical characteristics.

The method for providing the ski boot 1, of the invention, comprises the steps of:
- providing the front contoured portion 3a and the rear contoured portion 4a via molding of a plastic material different from the plastic material with which the shell 2 is subsequently made;
- inserting the front contoured portion 3a and the rear contoured portion 4a into the mold that defines the molding cavity that corresponds to the shape of the shell 2;
- molding the shell 2 by injection molding into the molding cavity which accommodates the front contoured portion 3a and the rear contoured portion 4a;
- extracting the shell 2 from the molding cavity.

If the ski boot 1 is a boot for ski-mountaineering, but possibly also a boot for telemark skiing or in some cases for freeriding, it is possible for the step of providing the front contoured portion 3a to entail a step of insertion, into the mold shaped complementarily with respect to the front contoured portion 3a, of an insert 10 that defines two lateral engagement bodies 11 which are connected by a connecting element 12 and are adapted, during use, to protrude from the sides of the contoured front portion 3a and are adapted to define respective portions 11a for coupling with the toe element of a binding for alpine skiing.

The insert 10 is conveniently made of metal.

Preferably, both the front contoured portion 3a and the rear contoured portion 4a are made of the same plastic material.

Obviously, different plastic materials can be used to provide the front contoured portion 3a and the rear contoured portion 4a.

The plastic material or materials with which the front contoured portion 3a and/or the rear contoured portion 4a are made has/have a greater abrasion resistance and/or shock resistance than the plastic material with which the shell 2 is made.

Conveniently, the plastic material with which the shell is made has a higher melting temperature than the plastic material with which the at least one contoured portion 3a, 4a is made.

In more detail, the at least one contoured portion 3a, 4a is made of thermoplastic polyurethane (TPU), optionally additivated with polymers based on polyethers or polyester.

Obviously, the at least one contoured portion 3a, 4a can be made of different polymeric materials.

The shell 2 is made, advantageously, of poly[ether block amide] (PEBA).

Conveniently, the poly[ether block amide] used is based on PA6, PA66 polyamide or on a mixture thereof or even based on PA11, PA12 or on a mixture thereof.

Obviously, the shell 2 can be made of different polymeric materials.

The method according to the invention further includes an additional step of making a sole 5 and a step of application of the sole to the lower surface of the shell 2.

According to a further aspect, the present invention relates to a ski boot, generally designated by the reference numeral 1, that comprises a shell 2, which is pod-shaped and adapted to accommodate the foot of the user, and a leg cuff 6, which is adapted to wrap around the lower region of the tibia.

The shell 2 defines the two contoured portions 3a, 4a; advantageously, the two contoured portions 3a, 4a are shaped so as to be adapted to enable the ski boot 1 to be coupled to a "downhill" ski binding.

The front contoured portion 3a and the rear contoured portion 4a are conveniently "stepped".

The two contoured portions 3a, 4a comprise a front contoured portion 3a arranged at the toe 3 of the shell 2, and a rear contoured portion 4a arranged substantially at the heel 4 of the shell 2.

At least one of the contoured portions 3a, 4a is made of a plastic material with different characteristics from the plastic material with which the shell 2 is made.

Specifically, the shell 2 is injection molded on the at least one contoured portion 3a, 4a.

Preferably, the shell 2 is overmolded on the front contoured portion 3a and on the rear contoured portion 4a.

The shell 2 and the contoured portions 3a, 4a can likewise be obtained via bi-injection, a technology that allows two different materials to be injected into the same mold.

According to a possible embodiment, the ski boot 1 is a boot for ski-mountaineering.

The boot 1, in this case, has the leg cuff 6 articulated to the shell 2 about a rotation axis 100 that substantially corresponds to the axis of the ankle of the user.

Furthermore, in this case the boot 1 is provided with a locking device, which acts between the shell 2 and the leg cuff 6 and is adapted to pass, on command, between an operative position, which is used when going downhill and that locks the relative rotation of the leg cuff 6 with respect to the shell 2 about the pivoting axis 100, and a non-operative position in which the rotation of the leg cuff 6 is allowed with respect to the shell 2 about the pivoting axis 100.

If the boot 1 is a boot for ski-mountaineering, it is possible for the front contoured portion 3a to embed at least partially an insert 10 that defines two lateral engagement bodies 11 which are connected by a connecting element 12 and are adapted, during use, to protrude from the sides of the contoured front portion 3a.

The two engagement bodies 11 are adapted to define respective portions 11a for coupling with the toe element of a binding for alpine skiing.

Conveniently, the contoured portion 3a, 4a is provided with means adapted to increase the mechanical adhesion with the plastic material adapted to provide the shell 2.

For the purposes of example, such means adapted to increase the mechanical adhesion comprise a recess or a protuberance, provided at the surface of the front contoured portion 3a directed toward the heel 4, and/or of the surface of the rear contoured portion 4a directed toward the toe 3.

In practice it has been found that the invention fully achieves the intended aim and objects by providing a ski boot 1 that is extremely light, yet capable of ensuring an extremely reliable coupling to the bindings of a "downhill" ski.

In particular, for skis for ski-mountaineering, the solution makes it possible to significantly contain the weight, while still keeping the structure rigid, thus further facilitating the molding of the shell 2 in that the insert 10 is already embedded in the front contoured portion 3a.

The invention, thus conceived, is susceptible of numerous modifications and variations, all of which are within the scope of the appended claims.

In practice the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for providing a ski boot (1) of the type that comprises a shell (2) designed to accommodate the foot of a user and is provided with at least two contoured portions (3a, 4a), respectively a front contoured portion (3a) arranged at the toe (3) of said shell (2), and a rear contoured portion (4a) arranged at the heel (4) of said shell (2), said method comprising, in sequence, the steps of:
- providing said at least two contoured portions (3a, 4a) by molding plastic material;
- providing said shell (2) by injection molding of a plastic material that has different characteristics from the plastic material with which said at least two contoured portions (3a, 4a) are made;
- making a sole; and
- applying said sole (5) to the lower surface of said shell (2).

2. The method according to claim 1, **characterized in that** it comprises the steps of:
- inserting said at least two contoured portions (3a, 4a) in a mold which defines a molding cavity that corresponds to the shape of said shell (2);
- molding said shell (2) inside said molding cavity which accommodates said at least two contoured portions (3a, 4a);
- extracting said shell (2) from said molding cavity.

3. The method according to claim 1, **characterized in that** said step of providing at least two of said contoured portions (3a, 4a) and said step of molding said shell (2) comprises a bi-injection inside a molding cavity that corresponds to the shape of said shell (2), said molding cavity (2) being configured to delimit said at least one contoured portion (3a, 4a) during said step of provision of at least two of said contoured portions (3a, 4a).

4. The method according to one or more of the preceding claims, **characterized in that** said at least two contoured portions (3a, 4a) are made of a different plastic material from the plastic material with which said shell (2) is made.

5. The method according to one or more of the preceding claims, **characterized in that** said contoured front portion (3a) and said contoured rear portion (4a) are made of the same plastic material or of respective mutually different plastic materials.

6. The method according to one or more of the preceding claims, **characterized in that** said step of providing said first contoured front portion (3a) comprises a step of inserting in a mold, or in a portion of a mold, which is shaped complementarily with respect to said contoured front portion (3a), an insert (10) that defines two lateral engagement bodies (11) which are connected by a connecting element (12) and are adapted, during use, to protrude from the sides of said contoured front portion (3a) and are adapted to define respective portions for coupling with the toe element of a binding for alpine skiing.

7. The method according to one or more of the preceding claims, **characterized in that** the plastic material with which said at least two contoured portions (3a, 4a) are made has a greater abrasion resistance than the plastic material with which said shell (2) is made.

8. The method according to one or more of the preceding claims, **characterized in that** the plastic material with which said at least two contoured portions (3a, 4a) are made comprises a thermoplastic polyurethane (TPU).

9. The method according to one or more of the preceding claims, **characterized in that** the plastic material with which said shell (2) is made comprises a polyether block amide.

10. A ski boot (1) manufactured according to the method of claim 1, the ski boot (1) comprising a pod-shaped shell (2) designed to accommodate the foot of the user, and a leg cuff (6) designed to wrap around the lower region of the tibia, said shell (2) defining two contoured portions (3a, 4a), said two contoured portions (3a, 4a) comprising a front contoured portion (3a) arranged at the toe (3) of said shell (2), and a rear contoured portion (4a) arranged substantially at the heel (4) of said shell (2), wherein said contoured portions (3a, 4a) are made of a plastic material that has different characteristics from the plastic material with which said shell (2) is made by molding, said ski boot (1) comprising a sole (5) joined to the lower surface of said shell (2).

11. The ski boot (1) according to claim 10, **characterized in that** said shell (2) is overmolded onto said front contoured portion (3a) and/or onto said rear contoured portion (4a), or **in that** said at least one contoured portion (3a, 4a) and said shell (2) are obtained by bi-injection.

12. The ski boot (1) according to one or more of claims 10 to 11, **characterized in that** said front contoured portion (3a) embeds at least partially an insert (10) that defines two lateral engagement bodies (11) which are connected by a connecting element (12) and are adapted, during use, to protrude from the sides of said contoured front portion (3a) and are adapted to define respective portions (11a) for coupling with the toe element of a binding for alpine skiing.

13. The ski boot (1) according to one or more of claims 10 to 12, **characterized in that** said at least two contoured portions (3a, 4a) are provided with means adapted to increase the mechanical adhesion with the overmolded or bi-injected plastic material adapted to provide said shell (2).

14. The ski boot (1) according to one or more of claims 10 to 13, **characterized in that** said at least two contoured portions (3a, 4a) are made of a different plastic material from the plastic material with which said shell (2) is made.

## Patentansprüche

1. Ein Verfahren zur Herstellung eines Skistiefels (1) von der Art, die eine Schale (2) umfasst, welche dazu dient, den Fuß eines Benutzers aufzunehmen, und mit mindestens zwei konturierten Abschnitten (3a, 4a), einem vorderen konturierten Abschnitt (3a), der an der Spitze (3) der Schale (2) angeordnet ist, und einem hinteren konturierten Abschnitt (4a) ausgestattet ist, welcher am Absatz (4) der Schale (2) angeordnet ist; wobei das Verfahren nacheinander folgende Schritte umfasst:
- das Bereitstellen der mindestens zwei konturierten Abschnitte (3a, 4a) durch Formen von Kunststoffmaterial;
- das Bereitstellen der Schale (2) durch Spritzgießen eines Kunststoffmaterials, das andere Eigenschaften hat als das Kunststoffmaterial, mit dem die mindestens zwei konturierten Abschnitte (3a, 4a) hergestellt sind;
- das Herstellen einer Sohle und
- das Anbringen der Sohle (5) an der unteren Oberfläche der Schale (2).

2. Das Verfahren gemäß Anspruch 1, **dadurch gekennzeichnet, dass** es folgende Schritte umfasst:
- das Einsetzen der mindestens zwei konturierten Abschnitte (3a, 4a) in eine Form, die einen Formhohlraum bestimmt, welcher der Form der Schale (2) entspricht;
- das Formen der Schale (2) in dem Formhohlraum, der die mindestens zwei konturierten Abschnitte (3a, 4a) enthält;
- das Extrahieren der Schale (2) aus dem Formhohlraum.

3. Das Verfahren gemäß Anspruch 1, **dadurch gekennzeichnet, dass** der Schritt des Bereitstellens mindestens zweier der konturierten Abschnitte (3a, 4a) und der Schritt des Formens der Schale (2) eine Bi-Injektion in einem Formhohlraum umfasst, welcher der Form der Schale (2) entspricht, wobei der Formhohlraum (2) ausgebildet ist, um den mindestens einen konturierten Abschnitt (3a, 4a) während des Schritts des Bereitstellens mindestens zweier der konturierten Abschnitte (3a, 4a) zu begrenzen.

4. Das Verfahren gemäß einem oder mehreren der obigen Ansprüche, **dadurch gekennzeichnet, dass** die mindestens zwei konturierten Abschnitte (3a, 4a) aus einem Kunststoffmaterial bestehen, das sich von dem Kunststoffmaterial unterscheidet, mit dem die Schale (2) hergestellt ist.

5. Das Verfahren gemäß einem oder mehreren der obigen Ansprüche, **dadurch gekennzeichnet, dass** der konturierte vordere Abschnitt (3a) und der konturierte hintere Abschnitt (4a) aus demselben Kunststoffmaterial oder aus verschiedenen Kunststoffmaterialien bestehen.

6. Das Verfahren gemäß einem oder mehreren der obigen Ansprüche, **dadurch gekennzeichnet, dass** der Schritt des Bereitstellens des ersten konturierten vorderen Abschnitts (3a) einen Schritt des Einsetzens von Folgendem in eine Form, oder in einen Teil einer Form, umfasst, die komplementär zu dem konturierten vorderen Abschnitt (3a) geformt ist: einem Einsatz (10), welcher zwei seitliche Eingriffskörper (11) bestimmt, die durch ein Verbindungselement (12) verbunden und ausgebildet sind, um im Gebrauch von den Seiten des konturierten vorderen Abschnitts (3a) vorzustehen, und um jeweilige Abschnitte zur Kopplung mit dem Spitzenelement einer Bindung für alpinen Skisport zu bestimmen.

7. Das Verfahren gemäß einem oder mehreren der obigen Ansprüche, **dadurch gekennzeichnet, dass** das Kunststoffmaterial, mit dem die mindestens zwei konturierten Abschnitte (3a, 4a) hergestellt sind, eine höhere Abriebfestigkeit hat als das Kunststoffmaterial, mit dem die Schale (2) hergestellt ist.

8. Das Verfahren gemäß einem oder mehreren der obigen Ansprüche, **dadurch gekennzeichnet, dass** das Kunststoffmaterial, mit dem die mindestens zwei konturierten Abschnitte (3a, 4a) hergestellt sind, ein thermoplastisches Polyurethan (TPU) umfasst.

9. Das Verfahren gemäß einem oder mehreren der obigen Ansprüche, **dadurch gekennzeichnet, dass** das Kunststoffmaterial, mit dem die Schale (2) hergestellt ist, ein Polyetherblockamid umfasst.

10. Ein Skistiefel (1), hergestellt nach dem Verfahren gemäß Anspruch 1, wobei der Skistiefel (1) Folgendes umfasst: eine gehäuseförmige Schale (2), konstruiert, um den Fuß des Benutzers aufzunehmen, und eine Beinmanschette (6), konstruiert, um den unteren Bereich der Tibia zu umgeben, wobei die Schale (2) zwei konturierte Abschnitte (3a, 4a) bestimmt, wobei die beiden konturierten Abschnitte (3a, 4a) einen vorderen konturierten Abschnitt (3a) umfassen, der an der Spitze (3) der Schale (2) angeordnet ist, und einen hinteren konturierten Abschnitt (4a), der im Wesentlichen am Absatz (4) der Schale (2) angeordnet ist, wobei die konturierten Abschnitte (3a, 4a) aus einem Kunststoffmaterial bestehen, das andere Eigenschaften hat als das Kunststoffmaterial, mit dem die Schale (2) durch Formen hergestellt wird; wobei der Skistiefel (1) eine Sohle (5) umfasst, die mit der unteren Oberfläche der Schale (2) verbunden ist.

11. Der Skistiefel (1) gemäß Anspruch 10, **dadurch gekennzeichnet, dass** die Schale (2) auf den vorderen konturierten Abschnitt (3a) und/oder den hinteren konturierten Abschnitt (4a) überformt ist, oder dadurch, dass der mindestens eine konturierte Abschnitt (3a, 4a) und die Schale (2) durch Bi-Injektion hergestellt werden.

12. Der Skistiefel (1) gemäß einem oder mehreren der Ansprüche 10 bis 11, **dadurch gekennzeichnet, dass** der vordere konturierte Abschnitt (3a) mindestens teilweise einen Einsatz (10) einbettet, der zwei seitliche Eingriffskörper (11) bestimmt, welche über ein Verbindungselement (12) verbunden und ausgebildet sind, um im Gebrauch von den Seiten des konturierten vorderen Abschnitts (3a) vorzustehen und um jeweilige Abschnitte (11a) zur Kopplung mit dem Spitzenelement einer Bindung für alpinen Skisport zu bestimmen.

13. Der Skistiefel (1) gemäß einem oder mehreren der Ansprüche 10 bis 12, **dadurch gekennzeichnet, dass** die mindestens zwei konturierten Abschnitte (3a, 4a) mit Mitteln ausgestattet sind, die geeignet sind, die mechanische Haftung mit dem überformten oder bi-injizierten Kunststoffmaterial zu erhöhen, das ausgebildet ist, um die Schale (2) zu bilden.

14. Der Skistiefel (1) gemäß einem oder mehreren der Ansprüche 10 bis 13, **dadurch gekennzeichnet, dass** die mindestens zwei konturierten Abschnitte (3a, 4a) aus einem Kunststoffmaterial bestehen, das sich von dem Kunststoffmaterial unterscheidet, mit dem die Schale (2) hergestellt ist.

## Revendications

1. Procédé de fourniture d'une chaussure de ski (1) du type qui comprend une enveloppe (2) conçue pour recevoir le pied d'un utilisateur et est pourvue d'au moins deux parties profilées (3a, 4a), respectivement une partie profilée avant (3a) agencée au niveau de l'orteil (3) de ladite enveloppe (2), et une partie profilée arrière (4a) agencée au niveau du talon (4) de ladite enveloppe (2), ledit procédé comprenant, dans cet ordre, les étapes de :
- fourniture desdites au moins deux parties profilées (3a, 4a) par moulage de matière plastique ;
- fourniture de ladite enveloppe (2) par moulage par injection d'une matière plastique qui a des caractéristiques différentes de la matière plastique avec laquelle lesdites au moins deux parties profilées (3a, 4a) sont fabriquées ;
- fabrication d'une semelle ; et
- application de ladite semelle (5) sur la surface inférieure de ladite enveloppe (2).

2. Procédé selon la revendication 1, **caractérisé en ce qu'**il comprend les étapes de :
- insertion desdites au moins deux parties profilées (3a, 4a) dans un moule qui définit une cavité de moulage qui correspond à la forme de ladite enveloppe (2) ;
- moulage de ladite enveloppe (2) à l'intérieur de ladite cavité de moulage qui reçoit lesdites au moins deux parties profilées (3a, 4a) ;
- extraction de ladite enveloppe (2) depuis ladite cavité de moulage.

3. Procédé selon la revendication 1, **caractérisé en ce que** ladite étape de fourniture d'au moins deux desdites parties profilées (3a, 4a) et ladite étape de moulage de ladite enveloppe (2) comprend une bi-injection à l'intérieur d'une cavité de moulage qui correspond à la forme de ladite enveloppe (2), ladite cavité de moulage (2) étant configurée pour délimiter ladite au moins une partie profilée (3a, 4a) pendant ladite étape de fourniture d'au moins deux desdites parties profilées (3a, 4a).

4. Procédé selon une ou plusieurs des revendications précédentes, **caractérisé en ce que** lesdites au moins deux parties profilées (3a, 4a) sont constituées d'une matière plastique différente de la matière plastique avec laquelle ladite enveloppe (2) est fabriquée.

5. Procédé selon une ou plusieurs des revendications précédentes, **caractérisé en ce que** ladite partie profilée avant (3a) et ladite partie profilée arrière (4a) sont constituées de la même matière plastique ou de matières plastiques respectives mutuellement différentes.

6. Procédé selon une ou plusieurs des revendications précédentes, **caractérisé en ce que** ladite étape de fourniture de ladite première partie profilée avant (3a) comprend une étape d'insertion dans un moule, ou dans une partie d'un moule, qui est formé de façon complémentaire à ladite partie profilée avant (3a), un insert (10) qui définit deux corps d'engagement latéraux (11) qui sont reliés par un élément de liaison (12) et sont adaptés, pendant l'utilisation, pour faire saillie depuis les côtés de ladite partie profilée avant (3a) et sont adaptés pour définir des parties respectives pour couplage avec l'élément d'orteil d'une fixation pour ski alpin.

7. Procédé selon une ou plusieurs des revendications précédentes, **caractérisé en ce que** la matière plastique avec laquelle lesdites au moins deux parties profilées (3a, 4a) sont fabriquées présente une résistance à l'abrasion plus élevée que la matière plastique avec laquelle ladite enveloppe (2) est fabriquée.

8. Procédé selon une ou plusieurs des revendications précédentes, **caractérisé en ce que** la matière plastique avec laquelle lesdites au moins deux parties profilées (3a, 4a) sont fabriquées comprend un polyuréthane thermoplastique (TPU).

9. Procédé selon une ou plusieurs des revendications précédentes, **caractérisé en ce que** la matière plastique avec laquelle ladite enveloppe (2) est fabriquée comprend un amide de bloc de polyéther.

10. Chaussure de ski (1) fabriquée selon le procédé de la revendication 1, la chaussure de ski (1) comprenant une enveloppe en forme de cosse (2) conçue pour recevoir le pied de l'utilisateur, et un manchon de jambe (6) conçu pour s'enrouler autour de la région inférieure du tibia, ladite enveloppe (2) définissant deux parties profilées (3a, 4a), lesdites deux parties profilées (3a, 4a) comprenant une partie profilée avant (3a) agencée au niveau de l'orteil (3) de ladite enveloppe (2), et une partie profilée arrière (4a) agencée sensiblement au niveau du talon (4) de ladite enveloppe (2), dans laquelle lesdites parties profilées (3a, 4a) sont constituées d'une matière plastique qui a des caractéristiques différentes de la matière plastique avec laquelle ladite enveloppe (2) est fabriquée par moulage, ladite chaussure de ski (1) comprenant une semelle (5) assemblée à la surface inférieure de ladite enveloppe (2).

11. Chaussure de ski (1) selon la revendication 10, **caractérisée en ce que** ladite enveloppe (2) est surmoulée sur ladite partie profilée avant (3a) et/ou sur ladite partie profilée arrière (4a), ou **en ce que** ladite au moins une partie profilée (3a, 4a) et ladite enveloppe (2) sont obtenues par bi-injection.

12. Chaussure de ski (1) selon une ou plusieurs des revendications 10 à 11, **caractérisé en ce que** ladite partie profilée avant (3a) incorpore au moins partiellement un insert (10) qui définit deux corps d'engagement latéraux (11) qui sont reliés par un élément de liaison (12) et sont adaptés, pendant l'utilisation, pour faire saillie depuis les côtés de ladite partie profilée avant (3a) et sont adaptés pour définir des parties respectives (11a) pour couplage avec l'élément d'orteil d'une fixation pour ski alpin.

13. Chaussure de ski (1) selon une ou plusieurs des revendications 10 à 12, **caractérisée en ce que** lesdites au moins deux parties profilées (3a, 4a) sont pourvues de moyens adaptés pour augmenter l'adhérence mécanique à la matière plastique surmoulée ou bi-injectée adaptée pour fournir ladite enveloppe (2).

14. Chaussure de ski (1) selon une ou plusieurs des revendications 10 à 13, **caractérisée en ce que** lesdites au moins deux parties profilées (3a, 4a) sont constituées d'une matière plastique différente de la matière plastique avec laquelle ladite enveloppe (2) est fabriquée.
